# EUROPÄISCHE PATENTSCHRIFT

(11) **EP 4 173 475 B1**
(45) Veröffentlichungstag und Bekanntmachung des Hinweises auf die Patenterteilung: **29.10.2025**
(21) Anmeldenummer: 22186750.0
(22) Anmeldetag: 25.07.2022
(51) Int. Cl.: A01G 9/033, E04D 11/00, E04H 1/12, E04H 6/02

(54) **DACHKONSTRUKTION, GEBÄUDE MIT DACHKONSTRUKTION UND VERFAHREN ZUR HERSTELLUNG EINER DACHKONSTRUKTION**
ROOF STRUCTURE, BUILDING WITH ROOF STRUCTURE AND METHOD FOR MANUFACTURING A ROOF STRUCTURE
STRUCTURE DE TOIT, BÂTIMENT POURVU DE STRUCTURE DE TOIT ET PROCÉDÉ DE FABRICATION D'UNE STRUCTURE DE TOIT

(30) Priorität: 26.07.2021 DE 102021119244
(43) Veröffentlichungstag der Anmeldung: 03.05.2023
(73) Patentinhaber: Plattner, Wolfgang, 85247 Schwabhausen (DE)
(72) Erfinder: Plattner, Wolfgang, 85247 Schwabhausen (DE)
(74) Vertreter: Meissner Bolte Partnerschaft mbB

(56) Entgegenhaltungen:
- DE-B4- 10 330 318
- DE-U1- 202019 106 331
- KR-B1- 100 834 994
- KR-B1- 101 538 992
- TW-A- 201 417 701
- US-A1- 2013 167 440
- US-B1- 7 997 027

## Beschreibung

Die Erfindung betrifft eine Dachkonstruktion, insbesondere für eine freistehende Überdachung, beispielsweise ein Haltestellenhäuschen oder Carport, sowie ein Verfahren zur Herstellung einer Dachkonstruktion. Des Weiteren betrifft die Erfindung ein Gebäude mit Dachkonstruktion. Ferner betrifft die Erfindung eine Wasserniveau-Regulierungsvorrichtung.

Dachbegrünungen für freistehende Gebäude, beispielsweise Haltestellenhäuschen oder Carports, werden aus verschiedenen Gründen immer häufiger vorgesehen. Einerseits werten sie das Erscheinungsbild solcher Gebäude optisch auf. Andererseits schaffen derartige Begrünungen vor dem Hintergrund zunehmender Versiegelung natürlicher Oberflächen, etwa durch Gebäudebebauung und Straßenbau, neuen Lebensraum für Pflanzen und Tiere und leisten so einen wichtigen Beitrag zum ökologischen Ausgleich. Schließlich können Dachbegrünungen auch eine Schutzwirkung für das darunterliegende Dach haben, da sie es insbesondere vor UV-Strahlung und Niederschlag schützen.

Besonders extensive Dachbegrünungen erfreuen sich wegen ihres geringen Pflegeaufwands zunehmender Beliebtheit. Eine extensive Dachbegrünung ist in der Regel in folgenden Schichten aufgebaut: Die unterste Schicht ist eine Schutzschicht, die das vorhandene Dach gegen das Eindringen von Wasser oder Wurzeln abdichtet. Auf der Schutzschicht befindet sich eine Drainageschicht, die das Abfließen von Wasser ermöglicht und so insbesondere Staunässe verhindern soll. Oberhalb der Drainageschicht wird ein Pflanzsubstrat verteilt, das eine in der Regel mehrere Zentimeter hohe Substratschicht bildet. Schließlich werden in die Substratschicht niedrigwüchsige Pflanzen, insbesondere Moose, Bodendecker und Stauden, eingepflanzt. Diese Pflanzschicht bildet die oberste Schicht der Dachbegrünung.

Die US 7 997 027 B1 zeigt eine Dachkonstruktion zur Begrünung von Dächern.

Ein Aufbau eines herkömmlichen Dachbegrünungssystems bringt verschiedene Nachteile mit sich. Durch die verschiedenen Schichten, insbesondere der Substratschicht und der darüber liegenden Pflanzschicht, ergibt sich ein erhebliches Gewicht, das zusätzlich zum Eigengewicht des Daches auf den tragenden Elementen des Gebäudes lastet. Zur Ableitung von überschüssigem Wasser, insbesondere bei Niederschlag, werden zum Teil Dachschrägen vorgesehen. Schließlich können der Anschaffungspreis sowie der konstruktive Aufwand eines Dachbegrünungssystems, insbesondere auf Grund der verwendeten Materialien, relativ hoch sein.

Ausgehend vom Stand der Technik ergibt sich die Aufgabe der vorliegenden Erfindung, eine verbesserte Dachkonstruktion, insbesondere für eine freistehende Überdachung, aufzuzeigen. Insbesondere soll die Dachkonstruktion für eine Dachbegrünung geeignet sein. Darüber hinaus soll die Dachkonstruktion ein vergleichsweise geringes Gewicht haben und in einfacher und kostengünstiger Weise herzustellen sein. Ferner umfasst die Aufgabe der vorliegenden Erfindung, eine Wasserniveau-Regulierungsvorrichtung, insbesondere für die erfindungsgemäße Dachkonstruktion, anzugeben.

Diese Aufgabe wird durch eine Dachkonstruktion nach Anspruch 1 gelöst.

Insbesondere wird die Aufgabe gelöst durch eine Dachkonstruktion, die einen Rahmen mit Winkelprofil aufweist, in dem eine Profilplatte, insbesondere ein Wellblech, mit Kanälen und Stegen angeordnet ist. Dabei ist die Profilplatte derart mit dem Rahmen verbunden, dass Profilplatte und Rahmen ein (auslaufsicheres) Becken bilden, und mindestens eine Außenkante der Profilplatte einen Abstand zu einer benachbarten Innenkante des Rahmens aufweist, sodass eine Wasserzirkulation zwischen zumindest einigen der Kanäle möglich ist. Weiterhin ist ein vorzugsweise steifes Membranelement auf der Profilplatte derart angeordnet, dass das Becken in einen Funktionsbereich, insbesondere einen Bepflanzungsbereich, und einen Speicherraum unterteilt ist. Dabei ist der Speicherraum von unten durch die Profilplatte und den Rahmen, seitlich durch den Rahmen und nach oben durch das Membranelement begrenzt.

Der Funktionsbereich kann insbesondere als Bepflanzungsbereich, beispielsweise zur extensiven Dachbegrünung, ausgebildet sein. Alternativ oder zusätzlich können in dem Funktionsbereich ein oder mehrere Photovoltaikmodule angeordnet sein.

Die Dachkonstruktion kann eine Dachkonstruktion für eine freistehende Überdachung, beispielsweise Haltestellenhäuschen oder Carport, sein. Die Profilplatte kann auf mindestens einigen der Stegen angeordnet sein, um die Wasserzirkulation zu ermöglichen.

Unter einer Profilplatte mit Kanälen und Stegen kann im Kontext dieser Erfindung insbesondere ein Bauteil verstanden werden, das in einem Querschnitt abwechselnd steigende und fallende Abschnitte in regelmäßigen Abständen aufweist, zumindest aber über erhöhte und vertiefte Abschnitte verfügt. Handelsübliche Beispiele sind Wellblech und Trapezblech. Insbesondere kann ein solches Material in großen Mengen auf Rollen erhältlich sein und passend abgelängt bzw. zugeschnitten werden.

Ein Punkt der Erfindung besteht darin, dass die Profilplatte mit dem Rahmen wasserdicht verbunden ist. Damit kann die erfindungsgemäße Dachkonstruktion ohne weitere Elemente als wasserfestes Dach eines Gebäudes verwendet werden. Es ist sogar möglich, die Dachkonstruktion als konstruktives Gebäudeelement zu nutzen und so beispielsweise Seitenwände des Gebäudes durch die Dachkonstruktion zusammenzuhalten. Die Struktur der Profilplatte und das Winkelprofil des Rahmens bewirken zudem, dass die Dachkonstruktion selbsttragend ist.

Darüber hinaus bietet die Dachkonstruktion gute Voraussetzungen für eine Dachbegrünung, da der Speicherraum Wasser oder andere wässrige Nährstofflösungen aufnehmen kann und der Funktionsbereich zur Bildung einer Pflanzschicht, beispielsweise durch extensive Begrünung, genutzt werden kann.

In einer Ausführungsform umfasst der Funktionsbereich der Dachkonstruktion eine Substratschicht und eine Pflanzschicht, insbesondere eine extensive Begrünung. Dabei ist die Substratschicht oberhalb des Membranelements angeordnet und weist eine Dicke von mindestens 1 cm, insbesondere 3 cm, auf. Die Pflanzschicht ist oberhalb der Substratschicht angeordnet.

Eine Substratschicht dieser Dicke ist gut zur extensiven Begrünung geeignet. Der Bepflanzungsbereich, welcher die Substratschicht und die Pflanzschicht umfasst, ist von unten durch das Membranelement und vorzugsweise seitlich zumindest teilweise durch den Rahmen begrenzt. Dies verhindert ein ungewolltes Abrutschen bzw. Herunterfallen des Substrats und der Bepflanzung.

Der Rahmen der Dachkonstruktion besteht in einer Ausführungsform aus einer Legierung, beispielsweise verzinkter Edelstahl, einem Edelstahl oder Kunststoff. Dabei wird eine Rahmenhöhe von 10 cm - 50 cm, insbesondere 10 cm - 20 cm, insbesondere von 13 cm, bevorzugt. Es ist möglich, den Rahmen aus mehreren Rahmenteilen mit L-Profil zu bilden, beispielsweise vier Leisten mit L-Profil, die in einem Rechteck zueinander angeordnet und miteinander verschweißt werden.

Eine weitere Ausführungsform sieht vor, dass der Rahmen der Dachkonstruktion Befestigungsaufnahmen für lösbare Befestigungsmittel aufweist. Beispielweise kann es sich dabei um Schraublöcher für Schrauben mit metrischem Gewinde handeln. Diese können dazu genutzt werden, die Dachkonstruktion lösbar an einem Gebäude zu befestigen. So kann die Dachkonstruktion für Wartungsarbeiten demontiert werden, beispielsweise um Arbeiten an einer Bepflanzung der Dachkonstruktion durchzuführen, ohne dies auf dem Gebäudedach tun zu müssen.

In einer weiteren Ausführungsform umfasst der Rahmen der Dachkonstruktion eine (rechteckige) Aussparung in einem Boden, die von der Profilplatte überdeckt wird und deren Fläche mindestens 40 % einer Stellfläche des Rahmens beträgt. Bevorzugt hat der Rahmen eine Stellfläche von 2 - 10 m² , insbesondere 2 - 6 m², und/oder Auflageflächen, die um 5 - 50 cm, insbesondere 5 - 30 cm, in das Innere des Rahmens hineinragen.

Durch die Aussparung am Boden kann das Gesamtgewicht der Dachkonstruktion erheblich reduziert werden. Dennoch ergibt sich eine wasserdichte Dachkonstruktion, da die Aussparung von der Profilplatte vollständig überdeckt wird und diese mit dem Rahmen wasserdicht verbunden ist.

Dem Rahmen der Dachkonstruktion kommt unter anderem eine Versteifungs- und Tragefunktion für die Profilplatte zu. Bevorzugt weist der Rahmen eine Materialstärke auf, die deutlich höher als die Materialstärke der Profilplatte ist.

In einer weiteren Ausführungsform besteht die Profilplatte aus einer (verzinkten) Legierung, einem Edelstahl oder Kunststoff. Eine bevorzugte Höhe beträgt mindestens 4 cm, eine bevorzugte Materialstärke mindestens 0,5 mm, insbesondere von 0,5 mm - 3 mm, insbesondere 1 mm. Eine verzinkte Legierung ist besonders stabil und durch die Verzinkung vor Korrosion geschützt.

Die Stege der Profilplatte können in einer weiteren Ausführungsform seitlich (wasserdicht) verschlossen sein, insbesondere durch Verschlusskappen.

In einer weiteren Ausführungsform der Erfindung besteht eine (starre) Schweißverbindung zwischen dem Rahmen der Dachkonstruktion und der Profilplatte und/oder einem Dichtelement. Bei dem Dichtelement kann es sich beispielsweise um einen Abdichtstreifen handeln, der vorzugsweise mittels Flüssigkunststoff, insbesondere unter Einbettung eines Spezialvlieses, hergestellt ist. Insbesondere kann ein Dichtelement zur Abdichtung einer Kante wie folgt hergestellt werden: Zunächst wird in der Umgebung der Kante eine erste Schicht Flüssigkunststoff aufgetragen. Hierauf wird ein Streifen eines geeigneten Spezialvlieses derart angeordnet, dass es die Kante und eine gewisse Umgebung der Kante vollständig abdeckt, und angedrückt. Schließlich wird eine zweite Schicht Flüssigkunststoff großzügig auf das Spezialvlies aufgetragen, sodass dieses vollständig zwischen der ersten und zweiten Schicht Flüssigkunststoff eingebettet ist. Nach Aushärtung des Flüssigkunststoffs ist die Kante vollständig abgedichtet.

Das Membranelement umfasst in einer Ausführungsform eine Lochplatte und/oder ein Gitter, das insbesondere aus einer (verzinkten) Legierung, einem Edelstahl oder Kunststoff besteht. Eine bevorzugte Materialstärke beträgt mindestens 0,5 mm, insbesondere von 1 - 2 mm.

In einer Ausführungsform weist der Rahmen mindestens eine Öffnung zur Einstellung eines Wasserpegels im Speicherraum auf. Der Wasserpegel kann so auf eine Höhe eingestellt werden, die im Wesentlichen einer Höhendifferenz einer tiefstgelegenen Öffnung und einem tiefsten Punkt des Rahmens entspricht.

Die mindestens eine Öffnung hat insbesondere die Funktion eines Überlaufschutzes: Beispielsweise bei starken Niederschlägen soll verhindert werden, dass sich Staunässe im Speicherraum bildet, die zu Wurzelfäulnis an einer Bepflanzung führen kann. Andererseits kann der Speicherraum durch die Öffnung von außen mit Wasser befüllt werden, um ein gutes Wachstumsklima für die Bepflanzung zu schaffen.

In einer bevorzugten Ausführungsform umfasst ein Rahmen eine erste und eine zweite Öffnung an gegenüberliegenden Seitenteilen des Rahmens, wobei die erste Öffnung nicht höher liegt als die zweite Öffnung. In diesem Fall kann die erste Öffnung als Wasserablauf und die zweite Öffnung als Wasserzulauf dienen. Die Höhe des Wasserpegels entspricht dann im Wesentlichen dem Abstand der ersten Öffnung von der Bodenkante des Seitenteils.

Vorzugsweise ist der Wasserablauf mit einer Regentonne, Kanalisation etc. verbunden und der Wasserzulauf an eine Wasserversorgung angeschlossen. Besonders bevorzugt weisen Öffnungen Kupplungsstücke handelsüblicher Schlauchsysteme auf.

Alternativ kann eine Öffnung im Rahmen durch einen Stutzen gegeben sein, der am Rahmenboden angeflanscht ist und ein Loch im Rahmenboden überdeckt, durch das Wasser abfließen kann. Die Höhe des Wasserpegels entspricht dann im Wesentlichen der Höhe des Stutzens.

In einer Ausführungsform weicht eine Höhendifferenz (dA) einer tiefstgelegenen Öffnung und einem tiefsten Punkt des Rahmens um höchstens 5 cm von der Höhe (hP) der Profilplatte ab, d.h. es gilt | dA - hP | ≤ 5cm. Die tiefstgelegene Öffnung kann sich also im Wesentlichen auf einer Höhe eines höchstgelegenen Stegs der Profilplatte befinden, oder bis zu 5 cm darüber oder darunter.

Gilt beispielsweise dA - hP = 5cm, befindet sich die Höhe einer tiefstgelegenen Öffnung 5 cm über der Höhe eines höchstgelegenen Stegs. Auf diese Weise kann ein Wasserpegel eingestellt werden, bei dem die Substratschicht teilweise unter Wasser steht.

In einer weiteren Ausführungsform umfasst eine Dachkonstruktion mehrere Rahmen wie vorstehend beschrieben, insbesondere Rahmen mit separaten Zulauf- und Ablauföffnungen. Bevorzugt ist eine Ablauföffnung eines ersten Rahmens mit einer Zulauföffnung eines zweiten Rahmens verbunden, sodass ein Wasseraustausch zwischen dem ersten und zweiten Rahmen möglich ist. Besonders bevorzugt wird auf diese Weise eine Kette aller Rahmen der Dachkonstruktion gebildet.

Die Aufgabe wird darüber hinaus durch ein Gebäude gelöst, das ein Dach mit einer der Dachkonstruktionen wie vorstehend beschrieben aufweist. Insbesondere kann es sich um ein freistehendes Gebäude handeln, beispielsweise ein Haltestellenhäuschen oder einen Carport.

Es ergeben sich ähnliche Vorteile, wie diese bereits in Verbindung mit der erfindungsgemäßen Dachkonstruktion beschrieben wurden. Insbesondere kann die erfindungsgemäße Dachkonstruktion ein wasserfestes Dach des Gebäudes ausbilden und als konstruktives Gebäudeelement dienen.

Weiterhin wird die Aufgabe gelöst durch ein Verfahren zur Herstellung einer Dachkonstruktion, insbesondere zur Herstellung einer Dachkonstruktion wie vorstehend beschrieben. Das Verfahren umfasst die folgenden Schritte:
- Befestigen, insbesondere Verschrauben und/oder Anschweißen, einer Profilplatte, insbesondere Wellblech, in einem Rahmen aus Winkelprofil;
- Abdichten eines Übergangs zwischen der Profilplatte und dem Rahmen, insbesondere durch einen Abdichtstreifen, der vorzugsweise mittels Flüssigkunststoff, bevorzugt unter Einbettung eines Spezialvlieses, hergestellt ist;
- Erzeugen von mindestens einer Öffnung, insbesondere Zulauf- und/oder Ablauföffnung, im Rahmen.

Eine wie vorstehend beschriebene Dachkonstruktion eignet sich auch für die Umrüstung eines Gebäudes. In einer Ausführungsform kann ein Verfahren zur Umrüstung eines Gebäudes die folgenden Schritte enthalten:
- (zumindest teilweises) Entfernen einer ersten Dachkonstruktion;
- Bereitstellen einer zweiten Dachkonstruktion wie vorstehend beschrieben, insbesondere mit Befestigungsaufnahmen für lösbare Befestigungsmittel im Rahmen;
- Befestigung der zweiten Dachkonstruktion an Elementen des Gebäudes mittels lösbarer Befestigungsmittel, insbesondere Schrauben, unter Nutzung von Befestigungsaufnahmen im Rahmen der zweiten Dachkonstruktion.

Die Aufgabe wird ferner durch eine Wasserniveau-Regulierungsvorrichtung, insbesondere für eine Dachkonstruktion wie vorstehend beschrieben, gelöst. Die Wasserniveau-Regulierungsvorrichtung weist das Folgende auf:
- ein Fallrohr; und
- ein Ablaufrohr, das eine Ablauföffnung aufweist und an das Fallrohr angeschlossen ist, sodass eine Wasserableitung durch die Ablauföffnung in das Fallrohr erfolgt.

Dabei ist das Ablaufrohr gelenkig mit dem Fallrohr verbunden, insbesondere über ein Kugelgelenk.

Unter einem Fallrohr kann in diesem Zusammenhang ein Rohr bzw. Rohrabschnitt verstanden werden, welcher zur Dachentwässerung geeignet ist. Das Fallrohr kann hierbei beliebig angeordnet sein und muss nicht senkrecht verbaut sein.

Die Wasserniveau-Regulierungsvorrichtung kann in einem Wasserbecken angeordnet werden, sodass sich ein Wasserpegel auf einer Höhe einstellt, welche der Höhe der Ablauföffnung über einem tiefsten Punkt des Wasserbeckens entspricht. Das überschüssige Wasser wird dabei durch die Ablauföffnung, das Ablaufrohr und das Fallrohr abgeleitet. Bevorzugt wird die Wasserniveau-Regulierungsvorrichtung so angeordnet, dass sich die Verbindung zwischen Fallrohr und Ablaufrohr am Boden des Wasserbeckens befindet, damit das Wasserbecken vollständig entleert werden kann. Bei dem Wasserbecken kann es sich insbesondere um den Speicherraum einer Dachkonstruktion wie vorstehend beschrieben handeln.

Ein wesentlicher Punkt bei der beschriebenen Wasserniveau-Regulierungsvorrichtung ist, dass das Ablaufrohr gelenkig mit dem Fallrohr verbunden ist. Auf diese Weise kann die Höhe der Ablauföffnung (über einer Bodenebene) und damit der Wasserpegel im Wasserbecken eingestellt werden.

Insbesondere kann die Wasserniveau-Regulierungsvorrichtung in Verbindung mit der beschriebenen Dachkonstruktion als Wasserspeicher genutzt werden. Hierzu kann bei einer Speicherphase das Ablaufrohr aufgerichtet werden, um den Speicherraum mit Wasser zu füllen, und in einer Entleerungsphase das Ablaufrohr abgesenkt werden, um den Speicherraum (zumindest teilweise) über das Fallrohr zu entleeren.

Insofern umfassen die Ausführungsformen der oben beschriebenen Dachkonstruktion auch eine weitere Ausführungsform, bei der die Dachkonstruktion ferner eine Wasserniveau-Regulierungsvorrichtung wie vorstehend beschrieben aufweist. Dabei ist die Wasserniveau-Regulierungsvorrichtung derart in dem Becken angeordnet, dass sich ein Wasserpegel auf einer Höhe einstellt, die im Wesentlichen einer Höhe der Ablauföffnung des Ablaufrohres über einem tiefsten Punkt des Beckens entspricht.

In einer Ausführungsform der Wasserniveau-Regulierungsvorrichtung weist das Fallrohr mindestens eine Überlauföffnung auf, die insbesondere seitlich am Fallrohr angeordnet ist. Hierdurch verfügt die Wasserniveau-Regulierungsvorrichtung über einen zusätzlichen Ablauf bzw. Notablauf, der unabhängig von der Einstellung des Ablaufrohres ist.

Alternativ oder zusätzlich kann das Fallrohr ein Deckelelement aufweisen, das derart an dem Fallrohr angeordnet ist, dass das Deckelelement eine obere Öffnung des Fallrohrs zumindest teilweise überdeckt. Dabei ist das Deckelelement derart von dem Fallrohr beabstandet, dass eine Überlauföffnung im Bereich der oberen Öffnung des Fallrohrs ausgebildet ist. Mit anderen Worten wird hier eine obere Öffnung des Fallrohrs als Überlauföffnung genutzt, wobei das Deckelelement die Öffnung zumindest teilweise verdeckt, um das Eindringen von Fremdkörpern (z.B. Laub) zu reduzieren.

In einer Ausführungsform der Wasserniveau-Regulierungsvorrichtung weist diese ferner eine Antriebsvorrichtung auf, die dazu ausgebildet ist, das Ablaufrohr derart zu bewegen, dass sich die Höhe der Ablauföffnung (über einer Bezugsebene, z.B. Bodenebene des Wasserbeckens) ändert.

Bevorzugt weist die Wasserniveau-Regulierungsvorrichtung hierbei ferner eine Steuereinheit auf, welche dazu ausgebildet ist, einen Steuerbefehl für die Antriebsvorrichtung zu empfangen. Der Empfang des Steuerbefehls kann insbesondere über eine drahtlose Verbindung erfolgen, insbesondere über Bluetooth, WLAN und/oder eine Mobilfunkverbindung. Bei dieser Ausführungsform kann somit die Wasserniveau-Regulierungsvorrichtung ferngesteuert werden, beispielsweise über eine entsprechende Applikation auf einem mobilen Endgerät.

Weitere Ausführungsformen ergeben sich aus den Unteransprüchen.

Nachfolgend wird die Erfindung anhand von Ausführungsbeispielen beschrieben, die anhand der Abbildungen näher erläutert werden. Hierbei zeigen:
- Fig. 1: eine Dachkonstruktion als Explosionszeichnung
- Fig. 2: einen Teil der Dachkonstruktion aus Fig. 1 in Draufsicht
- Fig. 3: eine Dachkonstruktion im Querschnitt
- Fig. 4: eine Dachkonstruktion mit Dachbegrünung im Querschnitt
- Fig. 5: ein Haltestellenhäuschen mit Dachkonstruktion mit Bepflanzungsbereich
- Fig. 6: ein Haltestellenhäuschen mit Dachkonstruktion mit Solarmodulen
- Fig. 7: eine Wasserniveau-Regulierungsvorrichtung in seitlicher Ansicht
- Fig. 8a: eine Wasserniveau-Regulierungsvorrichtung gemäß einem weiteren Ausführungsbeispiel in einer ersten Einstellung
- Fig. 8b: eine Wasserniveau-Regulierungsvorrichtung gemäß einem weiteren Ausführungsbeispiel in zweiten Einstellung
- Fig. 9: eine Dachkonstruktion mit Wasserniveau-Regulierungsvorrichtung
- Fig. 10: eine Industriehalle mit Dachkonstruktion gemäß einem weiteren Ausführungsbeispiel.

In der nachfolgenden Beschreibung werden für gleiche und gleich wirkende Teile dieselben Bezugsziffern verwendet.

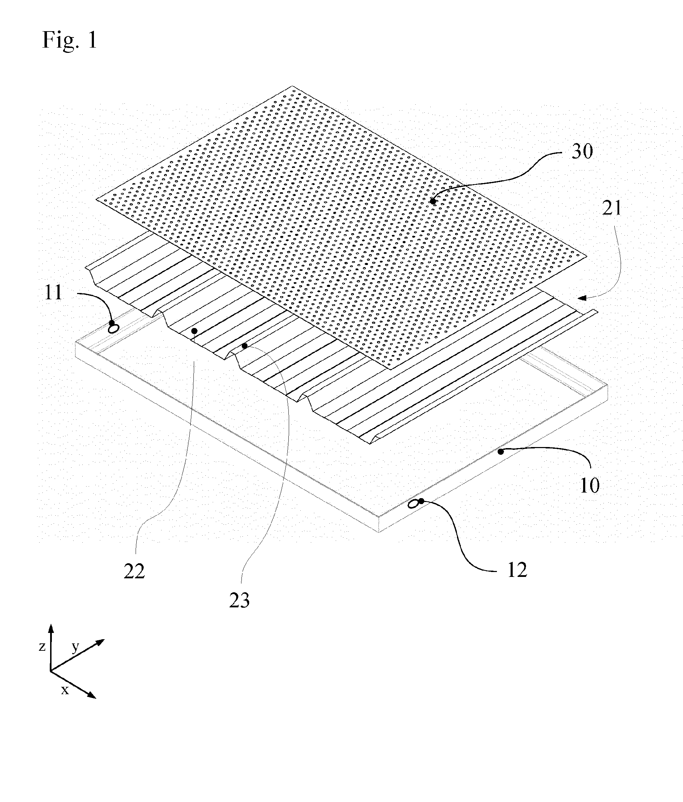

Zur einfacheren Beschreibung von Richtungsangaben wird für die Figuren 1-5 ein Koordinatensystem festgelegt, bei dem die x-Achse quer zu den Stegen der jeweils gezeigten Profilplatte, die y-Achse parallel zu den Stegen der jeweils gezeigten Profilplatte und die z-Achse senkrecht zur x-y-Ebene ist. Im Folgenden beziehen sich die Begriffe Länge, Breite bzw. Höhe daher auf entsprechende Abschnitte der x-, y- bzw. z-Achse.

Figur 1 zeigt schematisch den Aufbau eines ersten Ausführungsbeispiels einer erfindungsgemäßen Dachkonstruktion als Explosionszeichnung.

In einer untersten Ebene ist ein rechteckiger Rahmen 10 mit umlaufendem Winkelprofil zu erkennen. Am Boden des Rahmens 10 ist eine große, rechteckige Aussparung ausgebildet, deren Fläche einen Großteil der Stellfläche des Rahmens 10 ausmacht. Der Rahmen 10 verfügt somit nur über geringe Auflageflächen entlang seiner Innenkanten. An gegenüberliegenden Seitenflächen des Rahmens 10 sind eine Zulauföffnung 11 und eine Ablauföffnung 12 vorhanden.

Weiterhin ist in dem Rahmen 10 ist eine Profilplatte in Form eines Trapezblechs 21 derart angeordnet, dass es die Aussparung am Boden des Rahmens 10 vollständig überdeckt. Das Trapezblech 21 weist drei Stege 23 mit trapezförmigem Querschnitt und vier Kanäle 22 auf.

Oberhalb des Trapezblechs 21 ist eine Lochplatte 30 angeordnet, die das Trapezblech 21 vollständig überdeckt. Die Lochplatte 30 liegt auf den Stegen 23 sowie auf erhöhten Abschnitten an den Rändern des Trapezblechs 21, die keine vollständigen Stege ausbilden, auf.

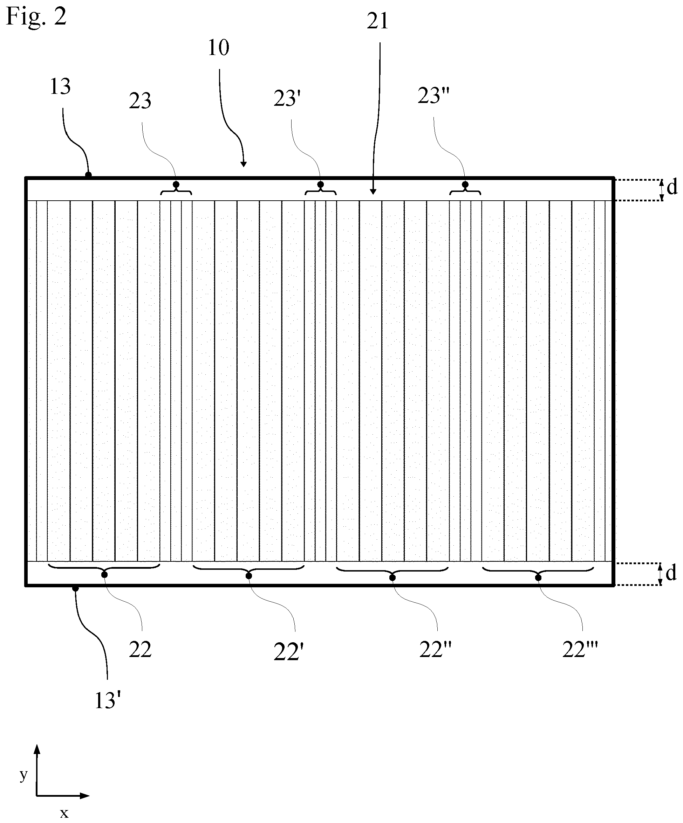

Figur 2 zeigt ein zweites Ausführungsbeispiel, ähnlich zu dem ersten Ausführungsbeispiel, in Draufsicht, wobei in dieser Ansicht nur der Rahmen 10 und das Trapezblech 21 dargestellt sind. Der Figur 2 ist zu entnehmen, dass die Länge des Trapezblechs 21 im Wesentlichen der Länge des Rahmens 10 entspricht, während die Breite des Trapezblechs 21 geringer als die Breite des Rahmens 10 ist. Das Trapezblech 21 ist derart im Rahmen 10 angeordnet, dass es in y-Richtung zu den beiden Außenkanten 13 und 13' des Rahmens 10 jeweils den Abstand d hat. Erfindungsgemäß wird durch den Abstand d ermöglicht, dass in zwei Innenbereichen des Rahmens 10 eine Wasserzirkulation zwischen den Kanälen 22, 22', 22" und 22‴ stattfinden kann. Ohne den Abstand d könnten die Stege 23, 23' und 23" sowie die Außenkanten 13 und 13' des Rahmens 10 eine Wasserzirkulation zwischen den Kanälen 22, 22', 22" und 22‴ behindern.

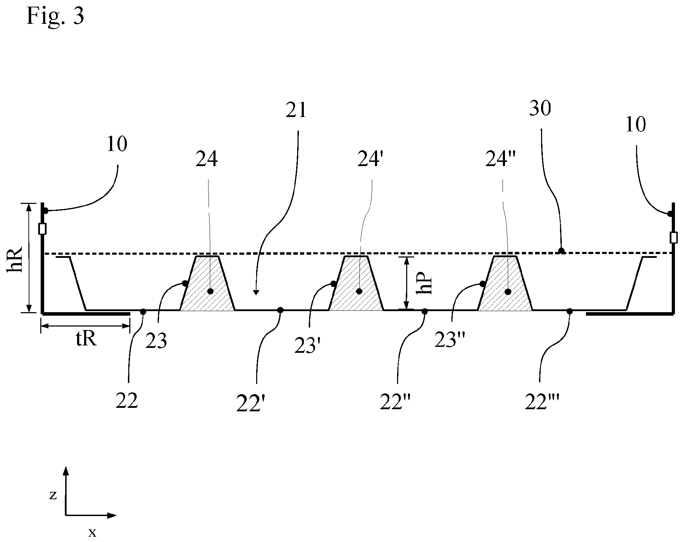

Um eine wasserdichte Verbindung zwischen Rahmen 10 und Trapezblech 21 einfach sicherstellen zu können, sollte der Abstand d nicht größer als die Rahmentiefe tR (vgl. Figur 3) gewählt sein. Beispielsweise kann die Rahmentiefe als tR = 13 cm und gleich der Rahmenhöhe hR (vgl. Figur 3) gewählt werden, während der Abstand d = 8 cm beträgt.

In einem (alternativen) Ausführungsbeispiel ist nur auf der Seite der Außenkante 13 ein derartiger Abstand d zum Rahmen 10 vorgesehen, während auf der gegenüberliegenden Seite das Trapezblech 21 bündig mit der Außenkante 13' abschließt. Auch auf diese Weise kann eine Wasserzirkulation zwischen den Kanälen 22, 22', 22" und 22‴ stattfinden.

Figur 3 zeigt ein drittes Ausführungsbeispiel einer erfindungsgemäßen Dachkonstruktion in einem Querschnitt. Diese Ansicht dient besonders zur Veranschaulichung der Höhen (in z-Richtung) der verschiedenen Bauteile und deren Anordnung zueinander.

Das Winkelprofil des Rahmens 10 erscheint in Figur 3 in Form von zwei L-Stücken. Die Rahmenhöhe hR und Rahmentiefe tR entsprechen hierbei den Längen der senkrechten bzw. waagerechten Schenkel der L-Stücke.

Das Trapezblech 21 erstreckt sich im Wesentlichen über die gesamte Länge (d.h. in x-Richtung) des Rahmens 10. Die beiden äußeren Kanäle 22 und 22‴ liegen auf beiden Seiten zumindest teilweise auf dem Boden des Rahmens 10 auf, sodass die Aussparung am Boden des Rahmens 10 vollständig durch das Trapezblech 21 überdeckt wird. Durch die wasserdichte Verbindung (nicht dargestellt) zwischen Rahmen 10 und Trapezblech 21 bilden diese Elemente eine vollständig wasserdichte Dachkonstruktion.

Die Stege 23, 23', 23" des Trapezblechs 21 sind mit Abdeckkappen 24, 24', 24" verschlossen. Dies ist Teil der wasserdichten Verbindung zwischen Rahmen 10 und Trapezblech 21 und verhindert, dass Wasser durch Bereiche unterhalb der Stege 23, 23', 23" abfließen kann, wenn in der Darstellungsebene der Rahmen 10 nicht direkt an der Seitenkante des Trapezblechs 21 anliegt (vgl. Figur 2).

Die Lochplatte 30 liegt auf den Oberseiten der Stege 23, 23', 23" auf, zudem wird sie an seinen beiden Enden (in x-Richtung) durch steigende Abschnitte des Trapezblechs 21, die keine vollständigen Stege ausbilden, abgestützt. Auf diese Weise wird die Lochplatte 30 vom Trapezblech 21 getragen und seitlich vom Rahmen 10 fixiert. Die Lochplatte 30 befindet sich im Wesentlichen in einer Höhe über dem Boden des Rahmens 10, die der Höhe hP des Trapezblechs entspricht.

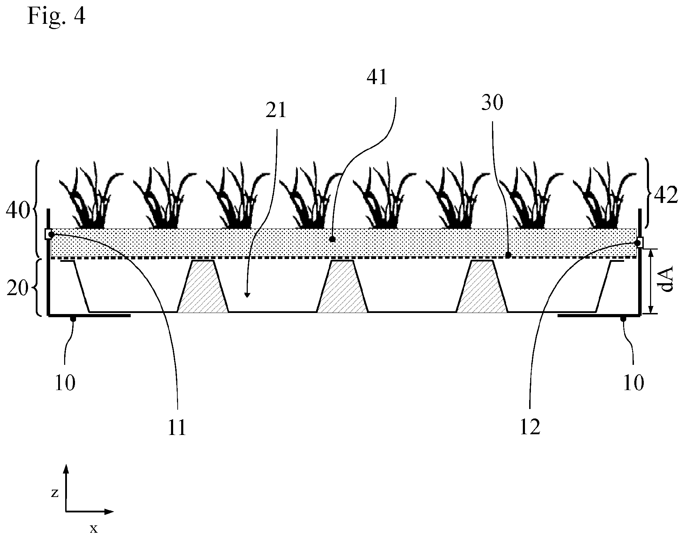

Figur 4 zeigt eine Weiterbildung des Ausführungsbeispiels aus Figur 3 in gleicher Darstellungsweise, wobei hier die Dachkonstruktion für eine extensive Dachbegrünung genutzt wird. Der Funktionsbereich ist hierfür als Bepflanzungsbereich 40 ausgebildet. Die Lochplatte 30 stellt hierbei ein Membranelement und die Grenze zwischen dem Speicherraum 20 und dem Bepflanzungsbereich 40 dar. Der Speicherraum 20 wird von unten durch das Trapezblech 21 und den Rahmen 10, seitlich durch den Rahmen 10 und nach oben durch die (auskragende) Lochplatte 30 begrenzt.

Der Bepflanzungsbereich 40 ist von unten durch die Lochplatte 30 und seitlich etwa halb hoch durch den Rahmen 10 begrenzt. Zur Kultivierung einer extensiven Dachbegrünung umfasst der Bepflanzungsbereich 40 eine Substratschicht 41, in die Pflanzen der Pflanzschicht 42 eingepflanzt sind. Die Substratschicht 41 endet leicht unterhalb des Rahmens 10, insbesondere mindestens 1 cm, um ein Abrutschen bzw. Herunterfallen von Pflanzsubstrat aus der Dachkonstruktion zu verhindern.

Der Speicherraum 20 der Dachkonstruktion fungiert als Wasserspeicher für die Pflanzschicht 42. Durch die wasserdichte Verbindung zwischen Rahmen 10 und Trapezblech 21 bildet der Speicherraum 20 ein auslaufsicheres Wasserbecken.

Erfindungsgemäß kann die Dachkonstruktion eine Dachbegrünung beherbergen, deren Wasserversorgung autonom, d.h. allein durch natürliche Prozesse aufrechterhalten wird: Insbesondere kann Regenwasser durch die Pflanzschicht 42, die Substratschicht 41 und die Lochplatte 30 sickern und sich im Speicherraum 20 sammeln. Von dort wird es über Wurzeln der Pflanzschicht 42 aufgenommen oder verdunstet. Darüber hinaus ermöglicht die erfindungsgemäße Dachkonstruktion, den Wasserhaushalt des Bepflanzungsbereichs 40 jenseits der beschriebenen natürlichen Prozesse zu steuern. Insbesondere kann ein in etwa gleichbleibender Wasserpegel im Speicherraum 20 erwünscht sein, um den Pflanzen der Pflanzschicht 42 möglichst konstante Bedingungen zu bieten. Insbesondere kann es erwünscht sein, den Wasserpegel so zu begrenzen, dass Staunässe im Wurzelbereich der Pflanzschicht 42 verhindert wird, um Wurzelfäulnis vorzubeugen. Weiterhin kann der Wunsch bestehen, den Speicherraum 20 über eine externe Wasserquelle zu füllen, ohne Wasser von oben (über die Pflanzschicht 42) zuführen zu müssen.

Zu diesem Zweck sind im Ausführungsbeispiel der Figur 4 an gegenüberliegenden Seitenteilen des Rahmens 10 die Zulauföffnung 11 zum Anschluss an eine Wasserversorgung und die Ablauföffnung 12 zum Anschluss an eine Ableitung oder einen Sammelbehälter, beispielsweise eine Regentonne, vorgesehen. Die Ablauföffnung 12 liegt hierbei etwas tiefer als die Zulauföffnung 11, beide aber oberhalb der Lochplatte 30, d.h. im Bereich der Substratschicht 41. Somit bildet die Ablauföffnung 12 die tiefstgelegene Öffnung, die einen Abstand dA zum Rahmenboden hat. Über die Zulauföffnung 11 wird der Speicherraum 20 mit Wasser befüllt. Der Wasserpegel im Speicherraum 20 übersteigt jedoch nie die Höhe dA, selbst bei weiterer Wasserzufuhr zum Beispiel durch Niederschläge, da auf dieser Höhe über dem Rahmenboden die Ablauföffnung 12 vorgesehen ist, über die das zusätzliche Wasser in die Ableitung oder einen Sammelbehälter abfließt.

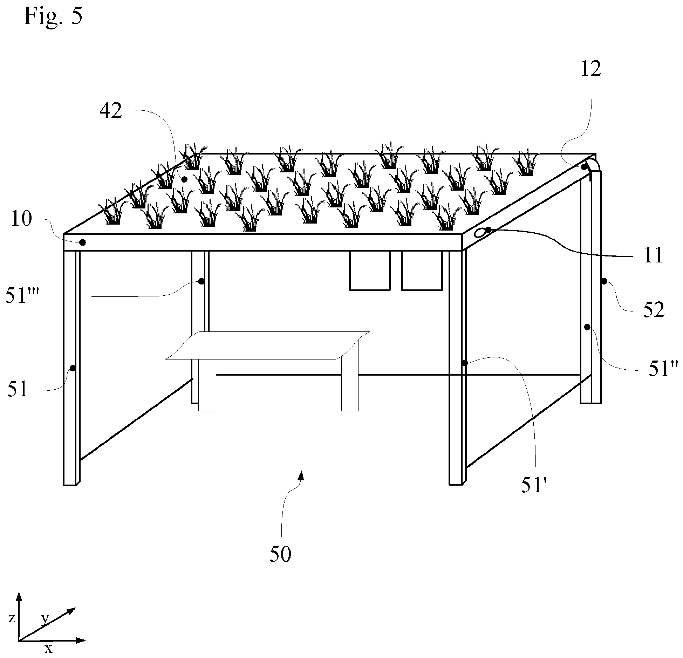

Figur 5 zeigt eine erfindungsgemäße Dachkonstruktion wie vorstehend beschrieben, die in einem Haltestellenhäuschen 50 verbaut ist. Die Dachkonstruktion erfüllt hierbei mehrere Funktionen: Einerseits überspannt die Dachkonstruktion den durch die Pfeiler 51, 51', 51", 51‴ begrenzten Innenraum vollständig und bildet eine wasserfeste Überdachung des Gebäudes. Andererseits stellt die Dachkonstruktion ein konstruktives Gebäudeelement des Haltestellenhäuschens 50 dar, da sie die Pfeiler 51, 51', 51", 51‴ mit den Seitenwänden und der Hinterwand zusammenhält. Hierzu ist der Rahmen 10 zumindest mit den Pfeilern 51, 51', 51", 51‴ lösbar verschraubt.

Ein Seitenteil des Rahmens 10 der Dachkonstruktion umfasst eine Zulauföffnung 11 und eine Ablauföffnung 12, über die, wie bereits im Zusammenhang mit Figur 4 beschrieben, ein Wasserpegel zur Versorgung der Pflanzschicht 42 eingestellt werden kann. Die Zulauföffnung 11 wird bei Bedarf zum Befüllen des Speicherraums mit Wasser an eine Wasserversorgung (nicht gezeigt) angeschlossen. Vorzugsweise umfasst die Zulauföffnung 11 ein handelsübliches Schlauchkupplungsstück. Die Ablauföffnung 12 mündet in das Regenrohr 52, sodass überschüssiges Wasser, beispielsweise bei starken Niederschlägen, über das Regenrohr 52 in eine nahegelegene Kanalisation (nicht gezeigt) abgeleitet wird.

Wie bereits im Zusammenhang mit Figur 4 beschrieben, ermöglicht die erfindungsgemäße Dachkonstruktion auch eine Dachbegrünung mit autonomer Wasserversorgung. Insofern sind die in Figur 5 dargestellten Zu- und Ablauföffnungen 11 und 12 nicht nötig und können vollständig weggelassen werden. Alternativ können sie in der Dachkonstruktion vorgesehen werden, aber nicht dauerhaft an eine Wasserversorgung bzw. Wasserableitung angeschlossen sein. In diesem Fall werden die nur zeitweise benötigten Öffnungen bevorzugt von einer lösbaren Abdeckung verdeckt.

Das in Figur 5 gezeigte Ausführungsbeispiel einer Dachkonstruktion auf einem Haltestellenhäuschen 50 kann weiter abgewandelt werden, indem das Dach des Haltestellenhäuschens 50 mehrere erfindungsgemäße Dachkonstruktionen umfasst. Hier bietet es sich an, Zu- und Ablauföffnungen derart untereinander zu verbinden, dass es einen zentralen Wasserzulauf und einen zentralen Wasserablauf gibt. Teile des Dachs, die nicht von einer erfindungsgemäßen Dachkonstruktion überdeckt bzw. gebildet werden, können vorzugsweise transparente Dachelemente umfassen, um natürliches Licht in das Gebäudeinnere durchzulassen.

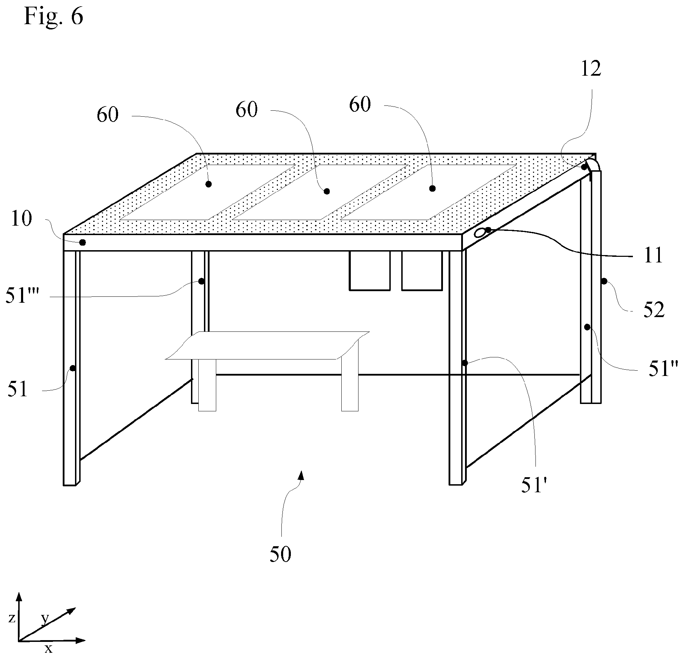

Figur 6 zeigt ein Haltestellenhäuschen mit erfindungsgemäßer Dachkonstruktion ähnlich zum Ausführungsbeispiel der Figur 5. Statt einem Bepflanzungsbereich 40 (wie in Figur 5) sind im Funktionsbereich der Dachkonstruktion drei Solarmodule 60 angeordnet. Darüber hinaus entspricht der Aufbau des Haltstellenhäuschens 50 bzw. der Dachkonstruktion dem Ausführungsbeispiel der Figur 5. Die Lochplatte 30 bietet eine stabile Plattform zur Befestigung der Solarmodule 60 und deckt das durch die Stege 23, 23', 23" gebildete Wasserreservoir ab. In einem Ausführungsbeispiel ist es auch möglich, auf die Lochplatte 30 zumindest abschnittsweise zu verzichten und die Solarmodule 60 direkt an den Stegen 23, 23', 23" zu befestigen.

Die Erläuterung der Dachkonstruktion auf einem Haltestellenhäuschen ist rein exemplarisch. Die Konstruktion kann bevorzugt auch in Verbindung mit (großflächigen) (Flach-)Dächern von Hallen eingesetzt werden. Auch Parkhausüberdachungen bieten sich an, um mit der erfindungsgemäßen Dachkonstruktion ausgestattet zu werden.

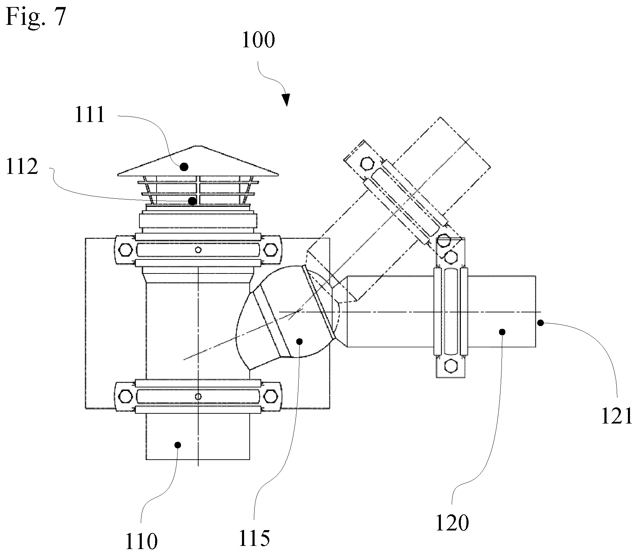

Figur 7 zeigt eine Wasserniveau-Regulierungsvorrichtung 100, welche das Fallrohr 110 und das daran angeschlossene Ablaufrohr 120 mit Ablauföffnung 121 aufweist. Das Ablaufrohr 120 ist durch das Kugelgelenk 115 gelenkig gelagert. An der oberen Öffnung des Fallrohrs 110 ist ein kegelförmiges Deckelelement 111 derart angeordnet, dass es die obere Öffnung des Fallrohrs 110 überdeckt. Auf diese Weise wird ein Eindringen von Fremdkörpern (z.B. Laub) in das Fallrohr 110 verhindert bzw. reduziert. Dabei ist das Deckelelement 111 derart beabstandet von der oberen Öffnung des Fallrohrs angeordnet, dass sich eine Überlauföffnung 112 bildet, durch die Wasser in das Fallrohr 110 eindringen und abgeleitet werden kann.

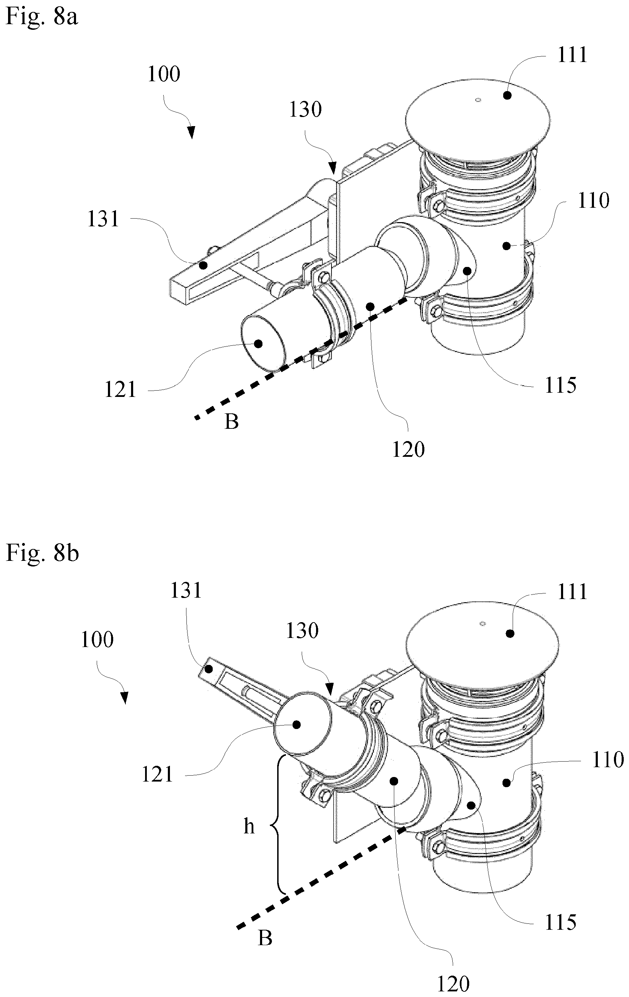

In Figur 8a ist eine Wasserniveau-Regulierungsvorrichtung 100 gemäß einem weiteren Ausführungsbeispiel in perspektivischer Ansicht dargestellt. Die gezeigte Wasserniveau-Regulierungsvorrichtung 100 entspricht im Wesentlichen der Vorrichtung aus Figur 7, weist zusätzlich eine Antriebsvorrichtung 130 auf. In dem gezeigten Ausführungsbeispiel umfasst die Antriebsvorrichtung einen drehbar gelagerten Antriebsarm 131, der in Längsrichtung parallel zur Längsrichtung des Ablaufrohrs 120 angeordnet ist, sowie einen Elektromotor (nicht dargestellt), der den Antriebsarm 131 antreibt. In der in Fig. 8a gezeigten Darstellung befindet sich das Ablaufrohr 120 in einer waagerechten Position und verläuft entlang der eingezeichneten Referenzlinie B.

Figur 8b zeigt das Ausführungsbeispiel der Figur 8a, wobei sich der Antriebsarm 131 und das Ablaufrohr 120 hier in einer aufgerichteten Position befinden. Die Ablauföffnung befindet sich nun in einer Höhe h über der Referenzlinie B. Liegt die Referenzlinie B in der Bodenebene eines Wasserbeckens, so stellt sich ein Wasserpegel ein, der im Wesentlichen die Höhe h besitzt.

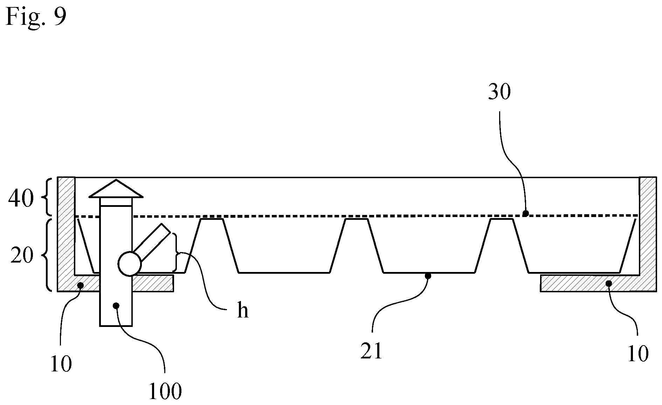

Figur 9 zeigt eine Dachkonstruktion in Querschnittsansicht gemäß einem weiteren Ausführungsbeispiel. Das Ausführungsbeispiel ist ähnlich dem Ausführungsbeispiel der Figur 4, wobei hier zur Einstellung eines Wasserpegels keine Ablauföffnung 12 im Rahmen (wie in Fig. 4), sondern eine Wasserniveau-Regulierungsvorrichtung 100 vorgesehen ist, wie beispielsweise in Fig. 7 dargestellt. In der dargestellten Position des Ablaufrohres stellt sich ein Wasserpegel der Höhe h ein.

Insbesondere kann die in Figur 9 gezeigte Dachkonstruktion in einem Haltestellenhäuschen verbaut sein (vgl. Ausführungsbeispiel der Fig. 5). Vorzugsweise ist dabei das Fallrohr 110 der Wasserniveau-Regulierungsvorrichtung 100 mit dem Regenrohr 52 verbunden, um eine regulierbare Entwässerung des Daches in die Kanalisation zu realisieren.

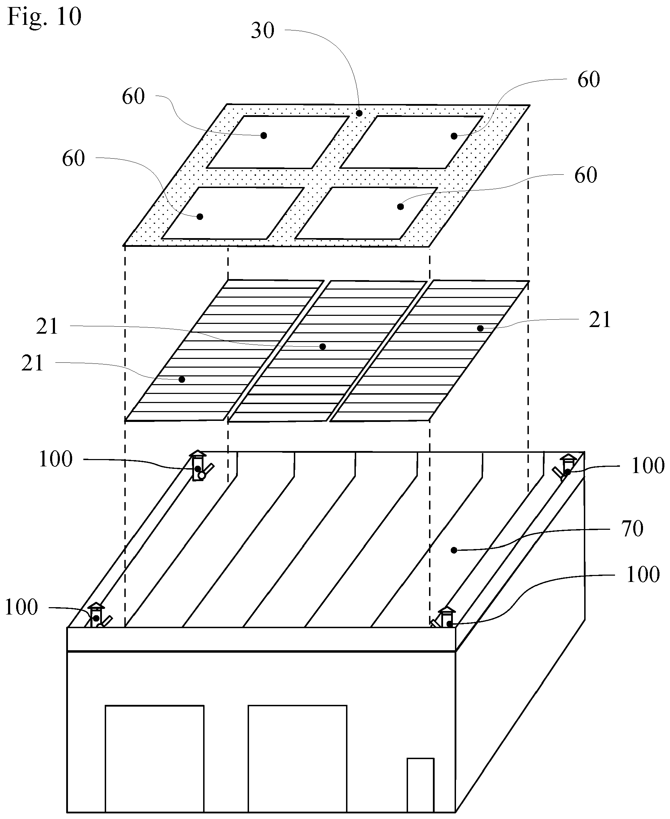

Figur 10 zeigt eine Industriehalle mit einer erfindungsgemäßen Dachkonstruktion als Explosionszeichnung. In dem gezeigten Ausführungsbeispiel weist das Dach der Industriehalle eine Wanne 70 auf, die durch Bitumenbahnen wasserdicht ausgekleidet ist. In den vier Eckbereichen des Daches ist jeweils eine Wasserniveau-Regulierungsvorrichtung 100 angeordnet. Die Wasserniveau-Regulierungsvorrichtungen 100 können einheitlich gesteuert werden, d.h. bei einem entsprechenden Steuerbefehl werden alle Ablaufrohre der Wasserniveau-Regulierungsvorrichtungen 100 in die gleiche Höhe über der Bodenebene der Wanne 70 bewegt, damit sich ein Wasserpegel der entsprechenden Höhe in der Wanne 70 einstellt. Durch die Wanne 70 und die mehreren Wasserniveau-Regulierungsvorrichtungen 100 wird somit ein regulierbarer Wasserspeicher auf dem Dach der Industriehalle ausgebildet, wobei die Regulierung durch die mehreren Wasserniveau-Regulierungsvorrichtungen besonders effizient erfolgt.

In der Wanne 70 des Daches sind, wie beispielhaft im Zusammenhang mit den Figuren 1-4 beschrieben, mehrere Elemente Trapezblech 21 und darauf eine Lochplatte 30 angeordnet. Hierdurch wird eine Grundfläche des Funktionsbereichs ausgebildet. In dem gezeigten Ausführungsbeispiel sind im Funktionsbereich, auf der Lochplatte 30, vier Solarmodule 60 angebracht. Alternativ oder zusätzlich kann der Funktionsbereich einen Bepflanzungsbereich aufweisen.

In den vorhergehenden Ausführungsbeispielen wird exemplarisch die Dachkonstruktion eines Haltestellenhäuschens und einer Industriehalle beschrieben. Die erfindungsgemäße Konstruktion kann aber auch in Verbindung mit Garagen oder Car-Ports eingesetzt werden. Allgemein eignet sich die beschriebene Dachkonstruktion für jede Form von Dachkonstruktionen, die sich im Wesentlichen horizontal erstrecken, z.B. Flachdächer von Wohnhäusern, (industrielle) Hallen, Überdachungen von Wegen, etc. Geringe Neigungen, z.B. im Bereich von bis zu 20 Prozent, können durch eine Anpassung der Konstruktion ausgeglichen werden.

Auch bei der Befestigung der Dachkonstruktion am Gebäude gibt es diverse weitere Möglichkeiten. Lediglich beispielhaft zeigen die Figuren 4 und 5 eine Dachkonstruktion, die auf Pfeilern 51, 51', 51", 51‴ steht. Die Dachkonstruktion kann aber beispielsweise auch auf T-förmigen Stahlträgern, Säulen, oder einer anderen Unterkonstruktion befestigt sein, beispielsweise aus Holz, Stahl oder Beton.

Auch die Wasserniveau-Regulierungsvorrichtung 100 ist geeignet, um in anderen Bereichen, beispielsweise auf Hallen- oder Parkhausdächern eingesetzt zu werden. Bei (großflächigen) Gewerbeimmobilen kommt der wasserregulierenden Funktion eine besondere Bedeutung zu, da bestehende Entwässerungssysteme ggf. nicht ausreichen, um hohe Niederschlagsmengen kurzfristig abzuführen. Die beschriebene Wasserniveau-Regulierungsvorrichtung 100 und/oder die einzelnen Ausführungsbeispiele der Dachkonstruktion können effektiv eingesetzt werden, um anfallende Wassermassen zu puffern und kontrolliert abzuführen.

Statt das abgeführte Wasser in eine Kanalisation oder dergleichen abzuleiten (wie im Zusammenhang mit Fig. 5 beschrieben), kann das Wasser auch zur weiteren Verwendung in einen Sammelbehälter geleitet werden. Der Sammelbehälter kann beispielsweise eine Regentonne sein, aus der Wasser zum Blumengießen entnommen werden kann. Alternativ kann der Sammelbehälter an eine Betriebswasserversorgung im Haus angeschlossen sein, sodass beispielsweise eine Toilettenspülung mit gesammeltem Regenwasser erfolgen kann.

An dieser Stelle sei darauf hingewiesen, dass alle oben beschriebenen Teile jeweils für sich - auch ohne im jeweiligen Zusammenhang zusätzlich beschriebene Merkmale, selbst wenn diese nicht explizit als optionale Merkmale im jeweiligen Zusammenhang individuell kenntlich gemacht worden sind, z. B. durch Verwendung von: insbesondere, vorzugsweise, beispielsweise, z. B., ggf. , runden Klammern, etc. - und in Kombination oder jeglicher Unterkombination als eigenständige Ausgestaltungen bzw. Weiterbildungen der Erfindung, wie sie insbesondere in der Beschreibungseinleitung sowie den Ansprüchen definiert ist, anzusehen sind. Abweichungen hiervon sind möglich. Konkret sei darauf hingewiesen, dass das Wort insbesondere oder runde Klammern keine im jeweiligen Kontext zwingende Merkmale kennzeichnen.

### Bezugszeichenliste

- 10: Rahmen
- 11: Zulauföffnung
- 12: Ablauföffnung
- 13, 13': Außenkanten des Rahmens

- 20: Speicherraum
- 21: Trapezblech
- 22, 22', 22", 22‴: Kanal
- 23, 23', 23": Steg
- 24, 24', 24": Abdeckkappe

- 30: Lochplatte

- 40: Bepflanzungsbereich
- 41: Substratschicht
- 42: Pflanzschicht

- 50: Haltestellenhäuschen
- 51, 51', 51", 51"': Pfeiler
- 52: Regenrohr

- 60: Solarmodul

- 70: Wanne

- 100: Wasserniveau-Regulierungsvorrichtung
- 110: Fallrohr
- 111: Deckelelement
- 112: Überlauföffnung
- 115: Kugelgelenk
- 120: Ablaufrohr
- 121: Ablauföffnung
- 130: Antriebsvorrichtung
- 131: Antriebsarm

- B: Referenzlinie in der Bodenebene
- d: Abstand zwischen Außenkante des Trapezblechs und Rahmen
- dA: Abstand der Ablauföffnung vom Rahmenboden
- hP: Höhe des Trapezblechs
- hR: Rahmenhöhe
- h: Höhe der Ablauföffnung über dem Boden
- tR: Rahmentiefe

## Patentansprüche

1. Dachkonstruktion, insbesondere für eine freistehende Überdachung, beispielsweise Haltestellenhäuschen oder Carport, aufweisend einen Rahmen (10) mit Winkelprofil, in dem eine Profilplatte (21), insbesondere ein Wellblech, mit Kanälen (22) und Stegen (23) angeordnet ist, wobei
die Profilplatte (21) derart mit dem Rahmen (10) verbunden ist, dass Profilplatte (21) und Rahmen (10) ein Becken bilden, und mindestens eine Außenkante der Profilplatte (21) einen Abstand (d) zu einer benachbarten Innenkante des Rahmens (10) aufweist, sodass eine Wasserzirkulation zwischen zumindest einigen der Kanäle möglich ist, und
ein vorzugsweise steifes Membranelement (30), das auf der Profilplatte (21), insbesondere auf mindestens einigen der Stege, derart angeordnet ist, dass das Becken in einen Funktionsbereich, insbesondere einem Bepflanzungsbereich (40), und einen Speicherraum (20) unterteilt ist, wobei der Speicherraum (20) von unten durch die Profilplatte (21) und den Rahmen (10), seitlich durch den Rahmen (10) und nach oben durch das Membranelement (30) begrenzt ist.

2. Dachkonstruktion nach Anspruch 1, wobei der Funktionsbereich eine Substratschicht (41) und eine Pflanzschicht (42), insbesondere extensive Begrünung, umfasst, wobei die Substratschicht (41) oberhalb des Membranelements (30) angeordnet ist und eine Dicke von mindestens 1 cm, insbesondere 3 cm, aufweist und die Pflanzschicht (42) oberhalb der Substratschicht (41) angeordnet ist.

3. Dachkonstruktion nach einem der vorgehenden Ansprüche, wobei der Rahmen (10) aus einer Legierung, einem Edelstahl oder Kunststoff besteht und/oder eine Rahmenhöhe (hR) von 10 cm - 50 cm, insbesondere 10 cm - 20 cm, insbesondere von 13 cm, aufweist.

4. Dachkonstruktion nach einem der vorgehenden Ansprüche,
wobei der Rahmen (10) Befestigungsaufnahmen für lösbare Befestigungsmittel aufweist.

5. Dachkonstruktion nach einem der vorgehenden Ansprüche, wobei der Rahmen (10) eine Aussparung in einem Boden umfasst, die von der Profilplatte (21) überdeckt wird und deren Fläche mindestens 40 % einer Stellfläche des Rahmens (10) beträgt.

6. Dachkonstruktion nach einem der vorgehenden Ansprüche,
wobei die Profilplatte (21) aus einer Legierung, einem Edelstahl oder Kunststoff besteht und/oder eine Höhe (hP) von mindestens 4 cm und/oder eine Materialstärke von mindestens 0,5 mm, insbesondere von 0,5 mm - 3 mm, insbesondere 1 mm, aufweist.

7. Dachkonstruktion nach einem der vorgehenden Ansprüche, wobei die Stege der Profilplatte (21) seitlich verschlossen sind, insbesondere durch Verschlusskappen (24).

8. Dachkonstruktion nach einem der vorgehenden Ansprüche mit einer Schweißverbindung zwischen Rahmen (10) und Profilplatte (21) und/oder einem Dichtelement, insbesondere einem Abdichtstreifen, der vorzugsweise mittels Flüssigkunststoff, insbesondere unter Einbettung eines Spezialvlieses, hergestellt ist.

9. Dachkonstruktion nach einem der vorgehenden Ansprüche, wobei das Membranelement (30) eine Lochplatte und/oder ein Gitter umfasst, insbesondere aus einer Legierung, einem Edelstahl oder Kunststoff besteht, und vorzugsweise eine Materialstärke von mindestens 0,5 mm, insbesondere von 1 - 2 mm aufweist.

10. Dachkonstruktion nach einem der vorgehenden Ansprüche, wobei der Rahmen (10) mindestens eine Öffnung (11, 12), insbesondere in mindestens einem Seitenteil des Rahmens, zur Einstellung eines Wasserpegels im Speicherraum aufweist, wobei sich der Wasserpegel auf einer Höhe einstellt, die im Wesentlichen einer Höhendifferenz (dA) einer tiefst gelegenen Öffnung (11) und einem tiefsten Punkt des Rahmens (10) entspricht,
wobei vorzugsweise die Höhendifferenz (dA) um höchstens 5 cm von der Höhe (hP) der Profilplatte abweicht.

11. Gebäude, insbesondere freistehend, beispielsweise Haltestellenhäuschen oder Carport,
**dadurch gekennzeichnet, dass**
ein Dach des Gebäudes eine Dachkonstruktion nach einem der vorgehenden Ansprüche umfasst.

12. Verfahren zur Herstellung einer Dachkonstruktion nach einem der Ansprüche 1 bis 10,
**gekennzeichnet durch**
die folgenden Schritte:
- Befestigen, insbesondere Verschrauben und/oder Anschweißen, der Profilplatte (21), insbesondere Wellblech, in dem Rahmen (10) aus Winkelprofil;
- Abdichten eines Übergangs zwischen der Profilplatte (21) und dem Rahmen (10), insbesondere **durch** einen Abdichtstreifen, der vorzugsweise mittels Flüssigkunststoff, bevorzugt unter Einbettung eines Spezialvlieses, hergestellt ist;
- Erzeugen von mindestens einer Öffnung (11, 12), insbesondere Zulauf- und/oder Ablauföffnung, im Rahmen (10).

13. Verfahren zur Umrüstung eines Gebäudes, insbesondere zur Bereitstellung eines Gebäudes nach Anspruch 11,
**gekennzeichnet durch**
die folgenden Schritte:
- zumindest teilweises Entfernen einer ersten Dachkonstruktion;
- Bereitstellen einer zweiten Dachkonstruktion nach einem der Ansprüche 1 bis 10, insbesondere nach Anspruch 4;
- Befestigung der zweiten Dachkonstruktion an Elementen des Gebäudes mittels lösbarer Befestigungsmittel, insbesondere Schrauben, unter Nutzung von Befestigungsaufnahmen im Rahmen der zweiten Dachkonstruktion.

## Claims

1. Roof structure, in particular for a freestanding roofing, for example, a transit stop shelter or carport, comprising a frame (10) having angled profile, in which a profile plate (21), in particular a corrugated sheet, having channels (22) and webs (23) is arranged, wherein
the profile plate (21) is connected to the frame (10) such that profile plate (21) and frame (10) form a basin, and at least one outer edge of the profile plate (21) has a spacing (d) to an adjacent inner edge of the frame (10), so that a water circulation is possible between at least some of the channels, and
a preferably rigid membrane element (30), which is arranged on the profile plate (21), in particular on at least some of the webs, such that the basin is divided into a functional area, in particular a planting area (40), and a storage space (20), wherein the storage space (20) is delimited from below by the profile plate (21) and the frame (10), laterally by the frame (10), and on top by the membrane element (30).

2. Roof structure as claimed in claim 1, wherein the functional area comprises a substrate layer (41) and a plant layer (42), in particular extensive greening, wherein the substrate layer (41) is arranged above the membrane element (30) and has a thickness of at least 1 cm, in particular 3 cm, and the plant layer (42) is arranged above the substrate layer (41).

3. Roof structure as claimed in any one of the preceding claims, wherein the frame (10) consists of an alloy, a stainless steel, or plastic and/or has a frame height (hR) of 10 cm - 50 cm, in particular 10 cm - 20 cm, in particular 13 cm.

4. Roof structure as claimed in any one of the preceding claims, wherein the frame (10) has fastening receptacles for releasable fastening means.

5. Roof structure as claimed in any one of the preceding claims, wherein the frame (10) comprises an opening in a bottom, which is covered by the profile plate (21), and the area of which is at least 40% of a footprint of the frame (10).

6. Roof structure as claimed in any one of the preceding claims, wherein the profile plate (21) consists of an alloy, a stainless steel, or plastic and/or has a height (hP) of at least 4 cm and/or a material thickness of at least 0.5 mm, in particular of 0.5 mm - 3 mm, in particular 1 mm.

7. Roof structure as claimed in any one of the preceding claims, wherein the webs of the profile plate (21) are laterally closed, in particular by closure caps (24).

8. Roof structure as claimed in any one of the preceding claims having a welded bond between frame (10) and profile plate (21) and/or a seal element, in particular a sealing strip, which is preferably produced by means of liquid plastic, in particular with embedding of a special nonwoven material.

9. Roof structure as claimed in any one of the preceding claims, wherein the membrane element (30) comprises a perforated plate and/or a grid, in particular made of an alloy, stainless steel, or plastic, and preferably has a material thickness of at least 0.5 mm, in particular of 1-2 mm.

10. Roof structure as claimed in any one of the preceding claims, wherein the frame (10) has at least one opening (11, 12), in particular in at least one side part of the frame, for adjusting a water level in the storage space, wherein the water level adjusts to a level which essentially corresponds to a height difference (dA) of a lowest-lying opening (11) and a lowest point of the frame (10),
wherein preferably the height difference (dA) deviates by at most 5 cm from the height (hP) of the profile plate.

11. Building, in particular freestanding, for example, transit stop shelter or carport,
**characterized in that**
a roof of the building comprises a roof structure as claimed in any one of the preceding claims.

12. Method for manufacturing a roof structure as claimed in any one of claims 1 to 10,
**characterized by**
the following steps:
- fastening, in particular screwing and/or welding on, the profile plate (21), in particular corrugated sheet, in the frame (10) made of angled profile;
- sealing a transition between the profile plate (21) and the frame (10), in particular by a sealing strip, which is preferably produced by means of liquid plastic, preferably with embedding of a special nonwoven material;
- creating at least one opening (11, 12), in particular a feed and/or drain opening, in the frame (10).

13. Method for refitting a building, in particular to provide a building as claimed in claim 11,
**characterized by**
the following steps:
- at least partially removing a first roof structure;
- providing a second roof structure as claimed in any one of claims 1 to 10, in particular as claimed in claim 4;
- fastening the second roof structure to elements of the building by means of releasable fastening means, in particular screws, using fastening receptacles in the frame of the second roof structure.

## Revendications

1. Structure de toit, en particulier pour une toiture indépendante, par exemple abribus ou carport,
présentant un cadre (10) avec profilé angulaire, dans lequel est disposée une plaque profilée (21), en particulier une tôle ondulée, avec des canaux (22) et des entretoises (23),
la plaque profilée (21) étant raccordée au cadre (10) de telle sorte que la plaque profilée (21) et le cadre (10) forment un bassin, et au moins une arête extérieure de la plaque profilée (21) présentant une distance (d) à une arête intérieure voisine du cadre (10) de sorte qu'une circulation d'eau entre au moins certains des canaux est possible, et
un élément à membrane (30) de préférence rigide, qui est disposé de telle sorte sur la plaque profilée (21), en particulier sur au moins certaines des entretoises, que le bassin est divisé en une zone fonctionnelle, en particulier une zone de plantation (40), et une zone de stockage (20), la zone de stockage (20) étant limitée depuis le bas par la plaque profilée (21) et le cadre (10), latéralement par le cadre (10) et vers le haut par l'élément à membrane (30).

2. Structure de toit selon la revendication 1, la zone fonctionnelle comprenant une couche de substrat (41) et une couche de plantes (42), en particulier une végétalisation extensive, la couche de substrat (41) étant disposée au-dessus de l'élément à membrane (30) et présentant une épaisseur d'au moins 1 cm, en particulier de 3 cm, et la couche de plantes (42) étant disposée au-dessus de la couche de substrat (41).

3. Structure de toit selon l'une des revendications précédentes, le cadre (10) étant composé d'un alliage, d'acier inoxydable ou de matériau synthétique, et/ou présentant une hauteur de cadre (hR) de 10 cm à 50 cm, en particulier 10 cm à 20 cm, en particulier de 13 cm**.**

4. Structure de toit selon l'une des revendications précédentes, le cadre (10) présentant des logements de fixation pour des moyens de fixation amovibles.

5. Structure de toit selon l'une des revendications précédentes, le cadre (10) présentant dans un fond un évidement qui est recouvert par la plaque profilée (21) et dont la surface est au moins égale à 40 % d'une surface d'emplacement du cadre (10).

6. Structure de toit selon l'une des revendications précédentes, la plaque profilée (21) étant composée d'un alliage, d'acier inoxydable ou de matériau synthétique, et/ou présentant une hauteur (hP) d'au moins 4 cm et/ou une épaisseur de matériau d'au moins 0,5 mm, en particulier de 0,5 mm à 3 mm, en particulier de 1 mm**.**

7. Structure de toit selon l'une des revendications précédentes, les entretoises de la plaque profilée (21) étant fermées latéralement, en particulier par des capuchons de fermeture (24).

8. Structure de toit selon l'une des revendications précédentes, avec un assemblage soudé entre le cadre (10) et la plaque profilée (21) et/ou avec un élément d'étanchéité, en particulier une bande d'étanchéité, qui est de préférence réalisée au moyen d'un matériau synthétique liquide, en particulier avec insertion d'un non-tissé spécial.

9. Structure de toit selon l'une des revendications précédentes, l'élément à membrane (30) comprenant une plaque perforée et/ou une grille, se composant en particulier d'un alliage, d'un acier inoxydable ou d'un matériau synthétique, et présentant de préférence une épaisseur de matériau d'au moins 0,5 mm, en particulier de 1 à 2 mm.

10. Structure de toit selon l'une des revendications précédentes, le cadre (10) présentant au moins une ouverture (11, 12), en particulier dans au moins une partie latérale du cadre, pour le réglage d'un niveau d'eau dans la zone de stockage, le niveau d'eau se réglant à une hauteur qui correspond essentiellement à une différence de hauteur (dA) d'une ouverture (11) placée le plus bas et à un point le plus bas du cadre (10),
la différence de hauteur (dA) différant de préférence de 5 cm au maximum de la hauteur (hP) de la plaque profilée.

11. Bâtiment, en particulier indépendant, par exemple abribus ou carport,
**caractérisé en ce**
**qu'**un toit du bâtiment comprend une structure de toit selon l'une des revendications précédentes.

12. Procédé de fabrication d'une structure de toit selon l'une des revendications 1 à 10,
**caractérisé par**
les étapes suivantes:
- fixation, en particulier vissage et/ou soudage de la plaque profilée (21), en particulier une tôle ondulée, dans le cadre (10) en profilé angulaire ;
- étanchéisation d'une transition entre la plaque profilée (21) et le cadre (10), en particulier par une bande d'étanchéité, qui est préférence réalisée au moyen d'un matériau synthétique liquide, de préférence avec insertion d'un non-tissé spécial ;
- réalisation d'au moins une ouverture (11, 12), en particulier une ouverture d'amenée et/ou d'évacuation, dans le cadre (10).

13. Procédé de transformation d'un bâtiment, en particulier de mise à disposition d'un bâtiment selon la revendication 11,
**caractérisé par**
les étapes suivantes :
- enlèvement au moins partiel d'une première structure de toit ;
- mise à disposition d'une deuxième structure de toit selon l'une des revendications 1 à 10, en particulier selon la revendication 4 ;
- fixation de la deuxième structure de toit sur des éléments du bâtiment au moyen de moyens de fixation amovibles, en particulier de vis, avec utilisation de logements de fixation dans le cadre de la deuxième structure de toit.
